# EUROPEAN PATENT SPECIFICATION

(11) **EP 4 545 891 B1**
(45) Date of publication and mention of the grant of the patent: **21.10.2026**
(21) Application number: 25155872.2
(22) Date of filing: 01.02.2018
(51) Int. Cl.: B60N 3/10, F25D 23/10, F25D 29/00

(54) **REFRIGERATOR FOR A VEHICLE**
KÜHLSCHRANK FÜR EIN FAHRZEUG
RÉFRIGÉRATEUR POUR UN VÉHICULE

(30) Priority: 02.02.2017 KR 20170014980
(43) Date of publication of application: 30.04.2025
(62) Document number(s) of the earlier application(s) in accordance with Art. 76 EPC: 18748559.4 / 3 576 982
(73) Proprietor: LG Electronics Inc., Yeongdeungpo-gu Seoul 07336 (KR)
(72) Inventor: KANG, Myoungju, 08592 Seoul (KR); YOUN, Deokhyun, 08592 Seoul (KR)
(74) Representative: Ter Meer und Partner mbB

(56) References cited:
- CN-Y- 2 691 933
- JP-A- S5 640 061
- JP-U- S5 036 168
- US-A- 2 522 623
- US-A- 4 103 510
- US-A- 5 168 718

## Description

The present disclosure relates to a refrigerator for a vehicle.

### Background Art

Refrigerators are apparatuses for storing products such as foods received in the refrigerator at a low temperature including sub-zero temperatures. As a result of this action, there is an advantage that user's intake with respect to the products may be improved, or a storage period of the products may be lengthened.

Refrigerators are classified into indoor refrigerators using a commercial power source or outdoor refrigerator using a portable power source. In addition, in recent years, a refrigerator for a vehicle, which is used after fixedly mounted on the vehicle, is increasing in supply. The refrigerator for the vehicle is more increasing in demand due to an increase in supply of vehicles and an increase in premium-class vehicle.

A conventional configuration of the refrigerator for the vehicle will be described.

First, there is an example in which heat in the refrigerator is forcibly discharged to the outside of the refrigerator by using a thermoelement. However, there is a limitation in that a cooling rate is slow due to low thermal efficiency of the thermoelement to deteriorate user's satisfaction.

For another example, there is an example in which a refrigerant or cold air is drawn from an air conditioning system installed for air-conditioning an entire interior of the vehicle and used as a cooling source for the refrigerator for the vehicle.

In this example, there is a disadvantage that a separate flow path of air or refrigerant is required to draw the air or refrigerator from the air conditioning system of the vehicle. Also, there is a limitation that low-temperature energy is lost during the movement of the air or refrigerant through the flow path. Also, there is a limitation that a position at which the refrigerator for the vehicle is installed is limited to a position that is adjacent to the air conditioning system of the vehicle due to the above-described limitations.

For another example, there is an example in which a refrigeration cycle using a refrigerant is applied.

However, in this example, since a part constituting the refrigeration cycle is large in size, most of the parts are mounted on a trunk, and only a door of a door of the refrigerator is opened to the inside of the vehicle. In this case, there is a limitation that a position for installing the refrigerator for the vehicle is limited. Also, there is a limitation that the trunk is significantly reduced in volume to reduce an amount of cargo that is capable of being loaded in the trunk.
JP S56 40061 A presents a refrigerating chamber for vehicles.
US 4 103 510 A presents a portable cooling chest operatively attachable to an automobile air conditioning system.
US 2 522 623 A relates to a portable electric refrigerator capable of being used in many types of conveyances, such as trucks, automobiles, ambulances and in the home as well as in both civil and military aircraft.
JP S50 36168 U relates to portable electric refrigerators.
CN 2 691 933 Y relates to an on-vehicle moving refrigerator.

Further relevant prior art is disclosed in document US5168718A.

### Disclosure

### Technical Problem

Embodiments also provide a vehicle refrigerator in accordance with claim 1 that is capable of increasing a capacity of the refrigerator.

Embodiments also provide a vehicle refrigerator in accordance with claim 1 that is capable of solving a limitation in which products accommodated in the refrigerator are slowly cooled.

Embodiments provide a vehicle refrigerator in accordance with claim 1 that is capable of improving energy efficiency.

### Technical Solution

The invention is defined by the features of the independent claim Further embodiments are disclosed in the dependent claims.

A refrigerator in accordance with claim 1 for a vehicle includes a cavity for accommodating a product, a machine room disposed at a side of the cavity, a machine room cover defining an inner space of the machine room, and a controller mounted on the machine room cover.

A side surface of the cavity may define at least a portion of an inner space of the machine room to realize the vehicle refrigerator in a more narrow space.

The machine room cover is coupled to a side surface of the cavity to prevent foreign substances from being introduced and improve space utilization.

The controller is coupled to the outside of a top surface of the machine room cover to prevent a problem in operation of the controller disposed in a relatively low-temperature space from occurring.

The controller may be disposed on a stepped part of the machine room cover to realize a stable operation of the controller.

A compressor control circuit controlling the compressor may be disposed in the controller to stably perform a control operation of the compressor that is a main part.

The controller may include a control board accommodated in the controller and a heat sink exposed to the outside of the controller so that external air is smoothly cooled to improve an operation of the compressor and reliability of an entire operation of the vehicle refrigerator.

A compressor control circuit and a temperature sensor may be disposed on a heat sink corresponding part coming into contact with the heat sink on the control board to improve cooling performance with respect to main parts.

A DC-DC converter and a diode may be disposed on the heat sink corresponding part to more quickly dissipate heat due to a switching device.

Air introduced through the suction port may flow through the space between the console cover and the machine room cover to secure a cooling passage.

The air flowing through the space between the console cover and the machine room cover may be introduced into the machine room to optimally cool the controller and then cool other parts within the machine room.

The controller is disposed outside a top surface of the machine room cover to solve the problem in structure for cooling the controller.

The controller may include a control board accommodated in the controller and a heat sink exposed to the outside of the controller. Thus, the cooling performance may be significantly improved.

A compressor control circuit for controlling the compressor may be disposed on the control board to secure a normal operation of the compressor that is a main part.

A compressor control circuit may be disposed on a heat sink corresponding part coming into contact with the heat sink on the control board to quickly dissipate heat generated to the outside when switching for the operation of the compressor is performed.

Thus, the whole configuration of the refrigerator may be compact, and stability in control function of the refrigerator may be improved.

The refrigerator includes a compressor accommodated in the machine room to compressor a refrigerant, a condensation module accommodated in the machine room to condense the refrigerant, and an evaporation module accommodated in the cavity to evaporate the refrigerant and thereby to cool the cavity to more quickly perform the refrigerating action, thereby improve satisfaction of consumers.

The machine room cover is coupled to the cavity to realize a more compact product.

A compressor control circuit controlling the compressor may be disposed in the controller to improve operation reliability of the compressor.

The controller may perform an overall control of the refrigerator for the vehicle to reliably realize a connection system of a control signal and drive the vehicle refrigerator without problems of the heat dissipation in the narrow space.

### Advantageous Effects

According to the embodiments, the electric parts that are necessary for operating the vehicle refrigerator disposed in the narrow space may stably operate.

### Description of Drawings

Fig. 1 is a perspective view of a vehicle according to an embodiment.
Fig. 2 is an enlarged perspective view illustrating a console of the vehicle.
Fig. 3 is a schematic perspective view illustrating the inside of a vehicle refrigerator.
Fig. 4 is a view for explaining an air flow outside a machine room of the vehicle refrigerator.
Fig. 5 is a perspective view of a machine room cover.
Fig. 6 is a perspective view of a controller.
Fig. 7 is an exploded perspective view of a controller.
Fig. 8 is a schematic circuit diagram of a control board.
Fig. 9 is a block diagram for explaining control of the vehicle refrigerator.
Fig. 10 is a view illustrating an internal configuration of a vacuum adiabatic body according to various embodiments.
Fig. 11 is a view of a conductive resistance sheet and a peripheral portion of the conductive resistance sheet.
Fig. 12 is a graph illustrating results obtained by observing a time and a pressure in a process of exhausting the inside of the vacuum adiabatic body when a supporting unit is used.
Fig. 13 is a graph illustrating results obtained by comparing a vacuum pressure with gas conductivity.

### Best Mode

In the following description according to embodiments with reference to the drawings, the same reference numerals are given to different drawings in the case of the same constituents.

Also, in the description of each drawing, the description will be made with reference to the direction in which the vehicle is viewed from the front of the vehicle, rather than the front viewed by the driver based on the traveling direction of the vehicle. For example, the driver is on the right, and the assistant driver is on the left.

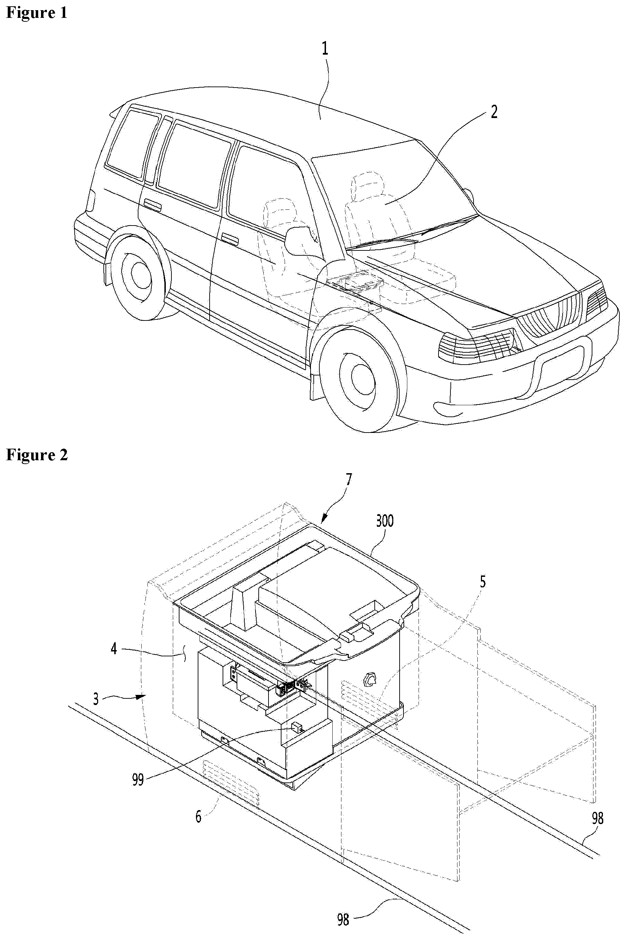

Fig. 1 is a perspective view of a vehicle being provided with a refrigerator according to claim 1.

Referring to Fig. 1, a seat 2 on which a user is seated is provided in a vehicle 1. The seat 2 may be provided in a pair to be horizontally spaced apart from each other. A console is disposed between the seats 2, and a driver places items that are necessary for driving or components that are necessary for manipulating the vehicle in the console. Front seats on which the driver and the assistant driver are seated may be described as an example of the seats 2.

It should be understood that the vehicle includes various components, which are necessary for driving the vehicle, such as a moving device such as a wheel, a driving device such as an engine, and a steering device such as a steering wheel.

The refrigerator according to claim 1 for a vehicle according to an embodiment may be preferably placed in the console. However, an embodiment of the present disclosure is not limited thereto. For example, the vehicle refrigerator may be installed in various spaces. For example, the vehicle refrigerator may be installed in a space between rear seats, a door, a globe box, and a center fascia. This is one of factors that the vehicle refrigerator according to an embodiment is capable of being installed only when power is supplied, and a minimum space is secured. However, it is an advantage of the embodiment in that it may be installed in the console between the seats, which is limited in space due to limitations in vehicle design.

Fig. 2 is an enlarged perspective view illustrating the console of the vehicle.

Referring to Fig. 2, a console 3 may be provided as a separate part that is made of a material such as a resin. A steel frame 98 may be further provided below the console 3 to maintain strength of the vehicle, and a sensor part 99 such as a sensor may be disposed in a spacing part between the console 3 and the steel frame 98. The sensor part 99 may be a part that is necessary for accurately sensing an external signal and measuring a signal at a position of the driver. For example, an airbag sensor that is directly connected to the life of the driver may be mounted.

The console 3 may have a console space 4 therein, and the console space 4 may be covered by a console cover 300. The console cover 300 may be fixed to the console 3 in a fixed type. Thus, it is difficult that external foreign substances are introduced into the console through the console cover 300. A vehicle refrigerator 7 according to claim 1 is seated in the console space 4.

A suction port 5 may be provided in a right surface of the console 3 to introduce air within the vehicle into the console space 4. The suction port 5 may face the driver. An exhaust port 6 may be provided in a left surface of the console 3 to exhaust warmed air while the vehicle refrigerator operates from the inside of the console space 4. The exhaust port 6 may face the assistant driver. A grill may be provided in each of the suction port 5 and the exhaust port 6 to prevent user's hand from being inserted and thereby to provide safety, prevent an object, which falls from an upper side, from being introduced, and allow air to be exhausted to flow downward so as not to be directed to the person.

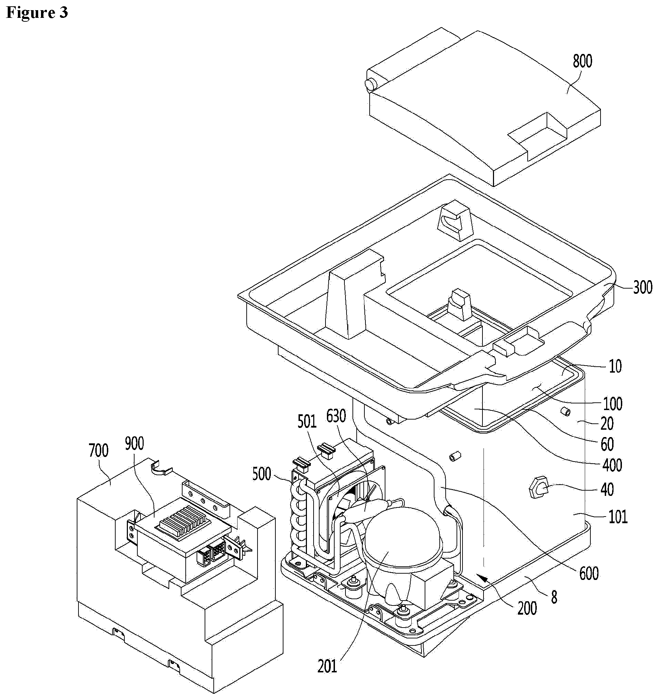

Fig. 3 is a schematic perspective view illustrating the inside of the vehicle refrigerator.

Referring to Fig. 3, the vehicle refrigerator 7 according to claim 1 includes a refrigerator bottom frame 8 supporting parts, a machine room 200 provided in a left side of the refrigerator bottom frame 8, and a cavity 100 provided in a right side of the refrigerator bottom frame 8. The machine room 200 is covered by a machine room cover 700, and an upper side of the cavity 100 may be covered by the console cover 300 and a door 800.

The machine room cover 700 may not only guide a passage of the cooling air, but also prevent foreign substances from being introduced into the machine room 200.

A controller 900 is disposed on the machine room cover 700 to control an overall operation of the vehicle refrigerator 7. Since the controller 900 is installed at the above-described position, the vehicle refrigerator 7 may operate without problems in a proper temperature range in a narrow space inside the console space 4.

That is to say, the controller 900 may be cooled by air flowing through a gap between the machine room cover 700 and the console cover 300 and separated from an inner space of the machine room 200 by the machine room cover 700. Thus, the controller 900 may not be affected by heat within the machine room 200

The console cover 300 may not only cover an opened upper portion of the console space 4, but also cover an upper end edge of the cavity 100. A door 800 may be further installed on the console cover 300 to allow the user to cover an opening through which products are accessible to the cavity 100

The door 800 may be opened by using rear portions of the console cover 300 and the cavity 100 as hinge points. Here, the opening of the console cover 300, the door 800, and the cavity 100 may be performed by conveniently manipulating the door 800 by the user because the console cover 300, the door 800, and the cavity 100 are horizontally disposed when viewed from the user and also disposed at a rear side of the console.

A condensation module 500 and a compressor 201 are installed in the machine room 200 in a flow direction of the cooling air, and a dryer (630) may be installed there too. A refrigerant conduit 600 for allowing the refrigerant to smoothly flow is provided in the machine room 200. A portion of the refrigerant conduit 600 extends to the inside of the cavity 100 to supply the refrigerant. The refrigerant conduit 600 extends to the outside of the cavity 100 through the upper opening through which the products are accessible to the cavity 100.

The cavity 100 has an opened top surface and five surfaces that are covered by a vacuum adiabatic body 101.

The vacuum adiabatic body 101 may include a first plate member 10 providing a boundary of a low-temperature inner space of the cavity 100, a second plate member 20 providing a boundary of a high-temperature outer space, and a conductive resistance sheet 60 blocking heat transfer between the plate members 10 and 20. Since the vacuum adiabatic body 101 has a thin adiabatic thickness to maximally obtain adiabatic efficiency, the cavity 100 having large capacity may be realized.

An exhaust and getter port for the exhaust of the inner space of the vacuum adiabatic body 101 and for installing a getter that maintains the vacuum state may be provided on one surface. The exhaust and getter port 40 may provide the exhaust and getter together to more contribute to miniaturization of the vehicle refrigerator 7.

An evaporation module 400 is installed in the cavity 100. The evaporation module 400 may forcibly blow the evaporation heat introduced into the cavity 100 through the refrigerant conduit 600 into the cavity 100. The evaporation module may be disposed at a rear side within the cavity 100.

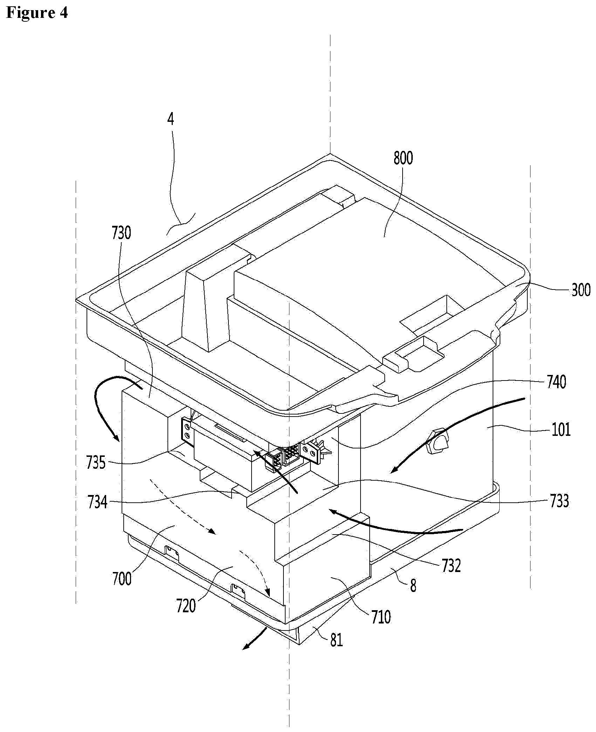

Fig. 4 is a view for explaining an air flow outside a machine room of the vehicle refrigerator.

Referring to Fig. 4, air introduced into the suction port 5 moves to a left side of the vehicle refrigerator through a space between the vacuum adiabatic body 101 defining a front wall of the cavity 100 and a front surface of the console space 4. Since a heating source is not provided at a right side of the vehicle refrigerator, the suction air may be maintained at its original temperature.

The air moving to the left side of the vehicle refrigerator may be changed in direction to a rear side to move along a top surface of the machine room 700 outside the machine room 200.

To smoothly guide the air flow, the machine room cover 700 may have a height that gradually increases backward from the front surface 710. Also, to provide a region in which the controller 900 is disposed, and prevent the parts within the machine room from interfering in position with each other, a stepped part may be disposed on the top surface of the machine room 700.

In detail, a first step portion 732, a second stepped part 733, and a third stepped part 735 may be successively provided backward from the front surface. A controller placing part 734 having the same height as the third stepped part is disposed on the second stepped part 733. Due to this structure, the controller 900 may be disposed in parallel to the third stepped part 735 and the controller placing part 734.

The air moving along the top surface of the machine room cover 700 may cool the controller 900. The air may be slightly heated while cooling the controller while cooling the controller.

The air moving up to the rear side of the machine room cover 700 flows downward. A large cover suction hole that is opened in the rear surface of the machine room cover 700 may be provided. For this, a predetermined space may be provided between the rear surface of the machine room cover 700 and the rear surface of the console space 4.

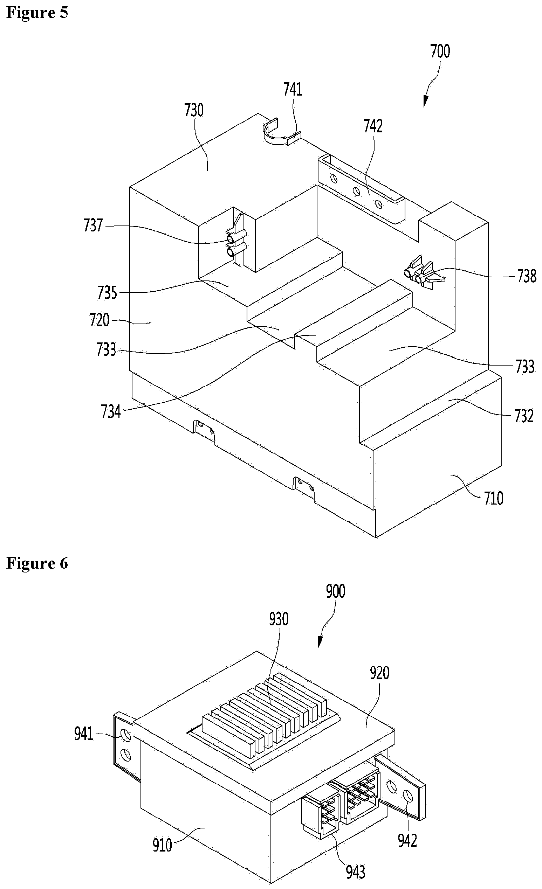

Fig. 5 is a perspective view of the machine room cover.

Referring to Fig. 5, the machine room cover 700 has a front surface 710, a top surface 730, and a left surface 700 as described above. A hole may be defined in a rear surface to allow air to be introduced.

The inner space of the machine room 100 is defined by the machine room cover 700, and the right and bottom surfaces of the machine room cover 700 may be provided as empty spaces. The left surface of the machine room 100 becomes the right surface of the cavity, and the bottom surface of the machine room 100 may be the bottom of the machine room.

Also, the upper surface 730 is provided with stepped parts 732, 733, and 735 to smoothly flow the air and prevent problem in positions of the internal parts of the machine room and the external parts of the machine room from occurring.

A controller placing part 734 protruding upward from a top surface of the second stepped part 733 is provided. A top surface of the controller placing part 734 and a bottom surface of the third stepped part 375 may have the same height. Thus, the controller 900 may be disposed in a horizontal state.

A recess part 733 having the same height as the top surface of the second stepped part 733 may be defined between the controller placing part 734 and the bottom surface of the third stepped part 735. The recess part 733 may provide a space between the controllers 900, and external air may be introduced into or discharged from the space. Thus, cooling of the controller 900 may be performed through the upper portion and the lower portion thereof. Thus, the cooling of the controller 900 may be more smoothly performed, and an operation temperature of the controller may be satisfied in the narrow space within the console 3.

The machine room cover may be coupled to an outer wall of the vacuum adiabatic body 101 defining the cavity 100. For this, a cavity coupling part 742 may be disposed at the right side of the machine room cover 700, and the machine room cover 700 and the cavity 100 may be provided as one body.

Since the machine room cover 700 completely seals a left surface of the cavity, the air within the machine room may not leak to the outside. Thus, the recirculation of the air may be prevented to improve the cooling efficiency.

The controller 900 is installed in the inner spaces between the second stepped part 733 and the third stepped part 735. The controller 900 is coupled and fixed to the machine room cover 700, and controller coupling parts 737 and 738 for the coupling of the controller are provided.

A through-hole 741 guiding the refrigerant conduit 600 that guides the refrigerant into the cavity through the upper opening of the cavity is defined in the right side of the machine room cover 700. The refrigerant conduit 600 passing through the through-hole 741 may correspond to the regeneration conduit adiabatic member. The regeneration conduit adiabatic member may be a member for thermally insulating a regeneration conduit system that exchanges heat of the first refrigerant conduit, which is introduced into the evaporation module 400, and heat of the second refrigerant conduit, which is discharged from the evaporation module. The regeneration conduit system may constitute a portion of the refrigerant conduit 600.

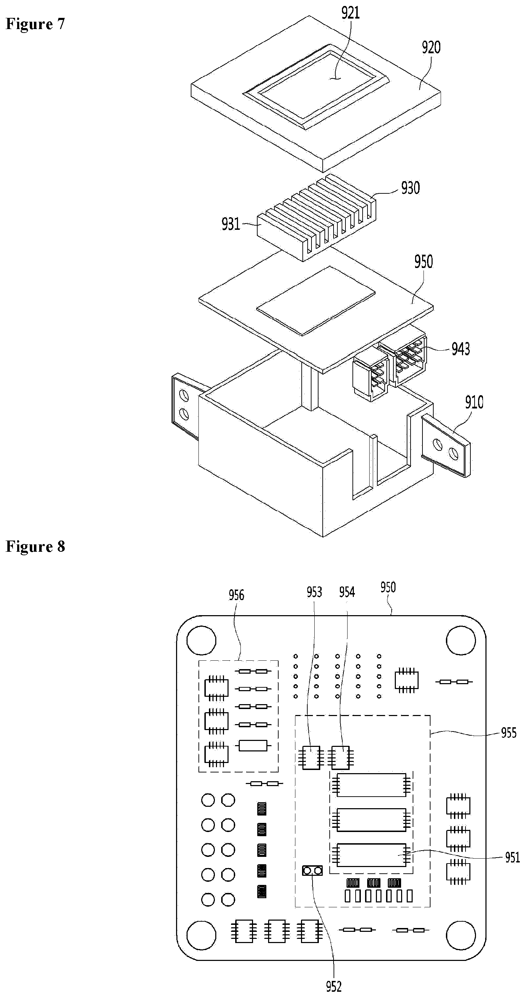

Fig. 6 is a perspective view of the controller, and Fig. 7 is an exploded perspective view of the controller.

Referring to Figs. 6 and 7, the controller includes a lower case 910 and an upper cover 920, which provide an inner space.

Cover coupling parts 941 and 942, which are aligned with the control coupling parts 737 and 738 of the machine room cover 700, may be provided in the lower case 910 and be horizontally seated on the top surface of the machine room cover 700. A connection terminal 943 may be disposed on one side of the lower case 910 to perform electrical connection of a power source and a sensor.

All electrical connection terminals provided in the vehicle refrigerator may use a double lock connection terminals so as not to release the coupling due to the driving of the vehicle and vibration due to the driving.

A control board 950 is disposed in an inner space defined by the lower case 910 and the upper cover 920.

A plurality of heat generation sources are mounted on the control board 950. Among them, the compressor driving circuit for driving the compressor 201 includes a switching circuit, and a large amount of heat is generated because relatively large current flows through the compressor.

The compressor driving circuit is generally coupled to a side surface of the compressor. However, in the case of the embodiment, since the inner space of the machine room is narrow as the vehicle refrigerator, and the position of the compressor is located just before the discharge of the machine room, the temperature of the air flowing is high. Thus, it is inappropriate to install the vehicle refrigerator in a space close to the compressor.

If the compressor driving circuit is provided together with the control board 950 that controls the whole of the vehicle refrigerator, the space of the vehicle refrigerator may be more compact. However, it is preferable that a heat dissipation structure having high cooling efficiency is provided because a large amount of heat more increases by mounting a plurality of parts on the narrow control board 950, which may affect the operation of the parts.

To solve this problem, a heat sink 930 is provided which comes into contact with a heat generation portion of the control board 950 to promote the heat radiation of the control board 950. A cover hole 921 that is opened to a top surface is provided in the upper cover 920. The heat sink 930 is exposed to the outside through the cover hole 921.

The exposed heat sink is cooled by the air passing through the spacing part between the machine room cover 700 and the console cover 300. In the spacing part between the machine room cover 700 and the console cover 300, relatively cool air in which the air introduced into the console space 4 does not cool other parts, flows. Therefore, the cooling action of the heat sink 930 may be smoothly performed.

A configuration of the controller 900 will be described in more detail.

Fig. 8 is a schematic circuit diagram of the control board.

Referring to Fig. 8, the control board 950 includes a refrigerator control circuit 956 for controlling an operation of the vehicle refrigerator and a compressor control circuit 951 for controlling an operation of the compressor 201.

The refrigerator control circuit 956 may perform functions such as door opening/closing, a fan operation, data storage, state determination, and a command. The compressor control circuit 951 is configured to control rotation of a motor of the compressor and has a high heat generation value due to execution of the switching operation and supply of the driving current.

High-temperature heat generated in the compressor control circuit 951 affects other circuits of the control board 950 and causes a risk of fire. Thus, a temperature sensor 952 is provided in the vicinity of the compressor control circuit 951 to stop the compressor 201 when the temperature sensor 952 senses a temperature equal to or higher than a threshold value. Therefore, the temperature sensor 952 does not rise above the threshold value.

Another circuit part having a high heat generation value in the control board is a DC-DC converter 953 and a diode 954 for boosting a voltage from about 12 volts to about 40 volts. Although these part are not the same as the compressor control circuit 951, the parts act as large factors of the temperature rise, and if the parts do not operate normally, the parts may lead to malfunction of the vehicle refrigerator.

A region including the compressor control circuit 951 and the temperature sensor 952 and also including the DC-DC converter 953 and the diode 954 is referred to as a heat sink corresponding portion 955, and the heat sink 930 may come into direct or indirect contact with the region corresponding to the heat sink 955.

As described above, since an installation place of the heat sink 930 is a place where relatively cool air flows as the outer space of the machine room cover 700, the cooling operation through the heat sink 930 may be performed smoothly. Thus, the cooling of the heat generation parts may be smoothly performed.

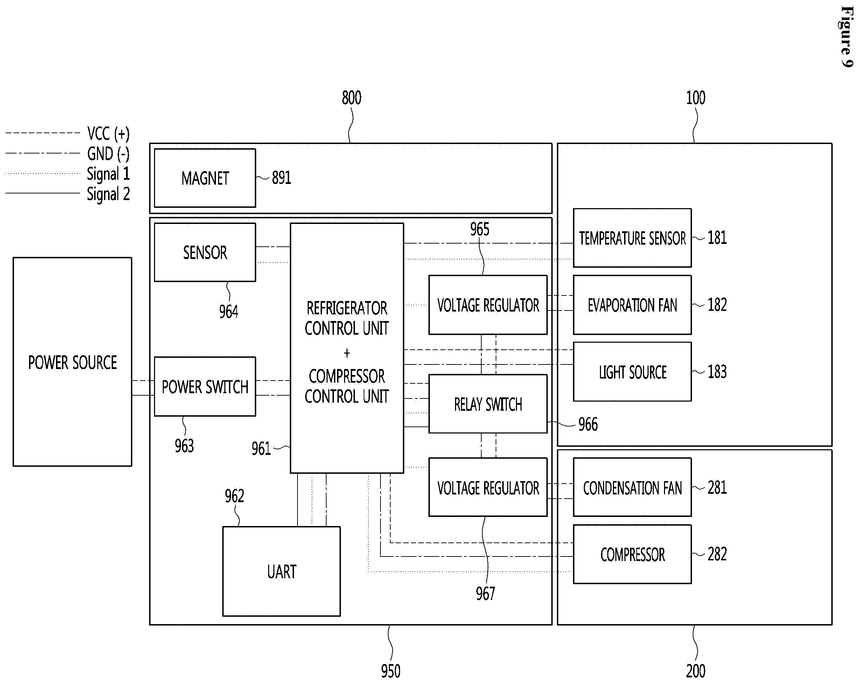

Fig. 9 is a block diagram for explaining control of the vehicle refrigerator.

Referring to Fig. 9, the vehicle refrigerator according to claim 1 includes a cavity 100, a machine room 200, a door 800, and a control board 950 for controlling the cavity, the machine room, and the door.

The cavity 100 is provided with a temperature sensor 181 for measuring a temperature in the cavity, an evaporation fan 182 included in the evaporation module 400 to cause cold air circulation inside the cavity, and a light source 183 that brightens the inside of the cavity. Each of the parts is controlled by a control unit 961 of the control board 950.

A condensation fan 281 that draws an air flow inside the machine room and a compressor 282 that draws a refrigerant flow from the refrigeration system are provided in the machine room 200. The condensation fan 281 and the compressor 282 are controlled by the control unit 961.

A magnet 891 may be installed on the door 800, and a corresponding operation may be performed by the controller 961 when the access of the magnet 891 is detected by the sensor 964.

A relay switch 966 operates under the control of the control unit 961, and voltage regulators 965 and 967 control an operation of fans 182 and 281. An UART port for inputting data may be provided on the control board 950. Necessary data may be stored by the UART port. A power switch 963 for interrupting power supplied from a 12-volt power source is disposed on the control board 950

The control unit 961 may be provided with a refrigerator control unit and a compressor control unit in a single chip.

When the control unit 961 is interpreted as a single chip, a compressor control circuit for switching and supplying a high voltage is provided in plurality of chips between the compressor 282 and the controller 961.

An operation of each part will be described sequentially.

When the vehicle refrigerator normally operates, the compressor 282, the condensing fan 281, and the evaporation fan 2 may operate. Of course, an intermittent operation may naturally occur depending on an operation state such as a supercooled state. The intermittent operation is sensed by the temperature sensor 181 and then controlled. An on/off operation of the compressor 282, the condensing fan 281, and the evaporation fan 2 may not be said to be performed together, and an on/off state may be different depending on a flow of the refrigerant and the current temperature.

When the door 800 is opened during the operation of the vehicle refrigerator, the sensor 964 senses a change in magnetic field due to disengagement or approach of the magnet to sense the opening of the door 800. Thereafter, the compressor 282 may be turned off, or the fans 182 and 281 may be stopped. When the opening of the door 800 is sensed, the evaporation fan 182 may be turned off at all times. This is for preventing cold air from being lost.

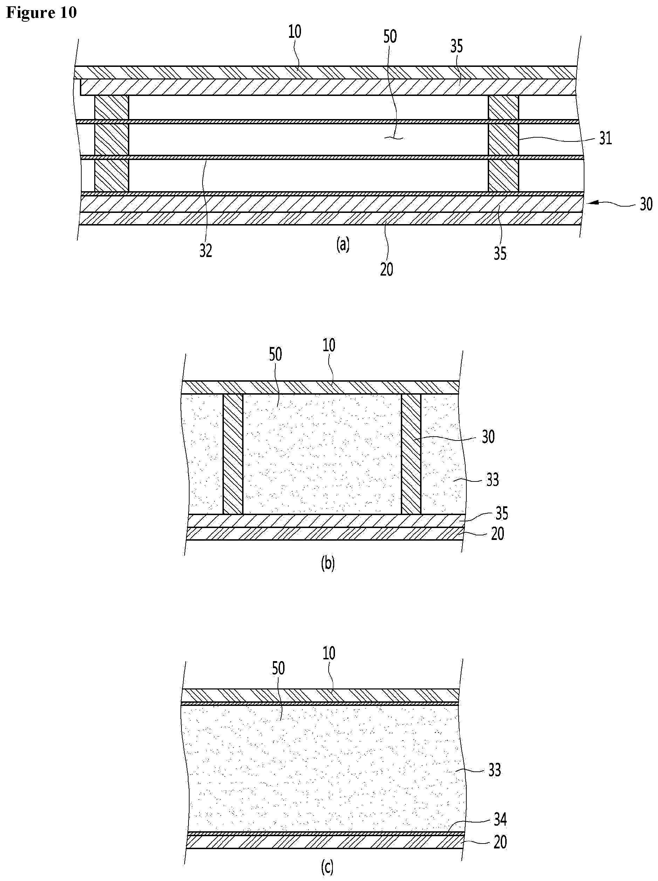

Fig. 10 is a view illustrating an internal configuration of a vacuum adiabatic body in accordance with claim 11.

First, referring to Fig. 10a, a vacuum space part 50 is provided in a third space having a different pressure from first and second spaces, preferably, a vacuum state, thereby reducing adiabatic loss. The third space may be provided at a temperature between the temperature of the first space and the temperature of the second space.

The third space is provided as a space in the vacuum state Thus, the first and second plate members 10 and 20 receive a force contracting in a direction in which they approach each other due to a force corresponding to a pressure difference between the first and second spaces. Therefore, the vacuum space part 50 may be deformed in a direction in which it is reduced. In this case, adiabatic loss may be caused due to an increase in amount of heat radiation, caused by the contraction of the vacuum space part 50, and an increase in amount of heat conduction, caused by contact between the plate members 10 and 20.

A supporting unit 30 may be provided to reduce the deformation of the vacuum space part 50. The supporting unit 30 includes bars 31. The bars 31 may extend in a direction substantially vertical to the first and second plate members 10 and 20 so as to support a distance between the first and second plate members 10 and 20. A support plate 35 may be additionally provided to at least one end of the bar 31. The support plate 35 connects at least two bars 31 to each other, and may extend in a direction horizontal to the first and second plate members 10 and 20.

The support plate 35 may be provided in a plate shape, or may be provided in a lattice shape such that its area contacting the first or second plate member 10 or 20 is decreased, thereby reducing heat transfer. The bars 31 and the support plate 35 are fixed to each other at at least one portion, to be inserted together between the first and second plate members 10 and 20. The support plate 35 contacts at least one of the first and second plate members 10 and 20, thereby preventing deformation of the first and second plate members 10 and 20. In addition, based on the extending direction of the bars 31, a total sectional area of the support plate 35 is provided to be greater than that of the bars 31, so that heat transferred through the bars 31 may be diffused through the support plate 35.

A material of the supporting unit 30 may include a resin selected from the group consisting of PC, glass fiber PC, low outgassing PC, PPS, and LCP so as to obtain high compressive strength, low outgassing and water absorption, low thermal conductivity, high compressive strength at high temperature, and excellent machinability.

A radiation resistance sheet 32 for reducing heat radiation between the first and second plate members 10 and 20 through the vacuum space part 50 will be described. The first and second plate members 10 and 20 may be made of a stainless material capable of preventing corrosion and providing a sufficient strength. The stainless material has a relatively high emissivity of 0.16, and hence a large amount of radiation heat may be transferred. In addition, the supporting unit 30 made of the resin has a lower emissivity than the plate members, and is not entirely provided to inner surfaces of the first and second plate members 10 and 20. Hence, the supporting unit 30 does not have great influence on radiation heat. Therefore, the radiation resistance sheet 32 may be provided in a plate shape over a majority of the area of the vacuum space part 50 so as to concentrate on reduction of radiation heat transferred between the first and second plate members 10 and 20.

A product having a low emissivity may be preferably used as the material of the radiation resistance sheet 32. In an embodiment, an aluminum foil having an emissivity of 0.02 may be used as the radiation resistance sheet 32. Also, at least one sheet of radiation resistance sheet 32 may be provided at a certain distance so as not to contact each other. At least one radiation resistance sheet may be provided in a state in which it contacts the inner surface of the first or second plate member 10 or 20. Even when the vacuum space part 50 has a low height, one sheet of radiation resistance sheet may be inserted. One sheet of radiation resistance sheet may be inserted so that the vacuum adiabatic body 101 has a thin thickness, and the inner capacity of the cavity 100 is secured.

Referring to Fig. 10b, the distance between the plate members is maintained by the supporting unit 30, and a porous substance 33 may be filled in the vacuum space part 50. The porous substance 33 may have a higher emissivity than the stainless material of the first and second plate members 10 and 20. However, since the porous substance 33 is filled in the vacuum space part 50, the porous substance 33 has a high efficiency for resisting the radiation heat transfer.

In this embodiment, the vacuum adiabatic body may be fabricated without using the radiation resistance sheet 32

Referring to Fig. 10c, the supporting unit 30 maintaining the vacuum space part 50 is not provided. Instead of the supporting unit 30, the porous substance 33 is provided in a state in which it is surrounded by a film 34. In this case, the porous substance 33 may be provided in a state in which it is compressed so as to maintain the gap of the vacuum space part 50. The film 34 is made of, for example, a PE material, and may be provided in a state in which holes are formed therein.

In this embodiment, the vacuum adiabatic body may be fabricated without using the supporting unit 30. In other words, the porous substance 33 may simultaneously serve as the radiation resistance sheet 32 and the supporting unit 30.

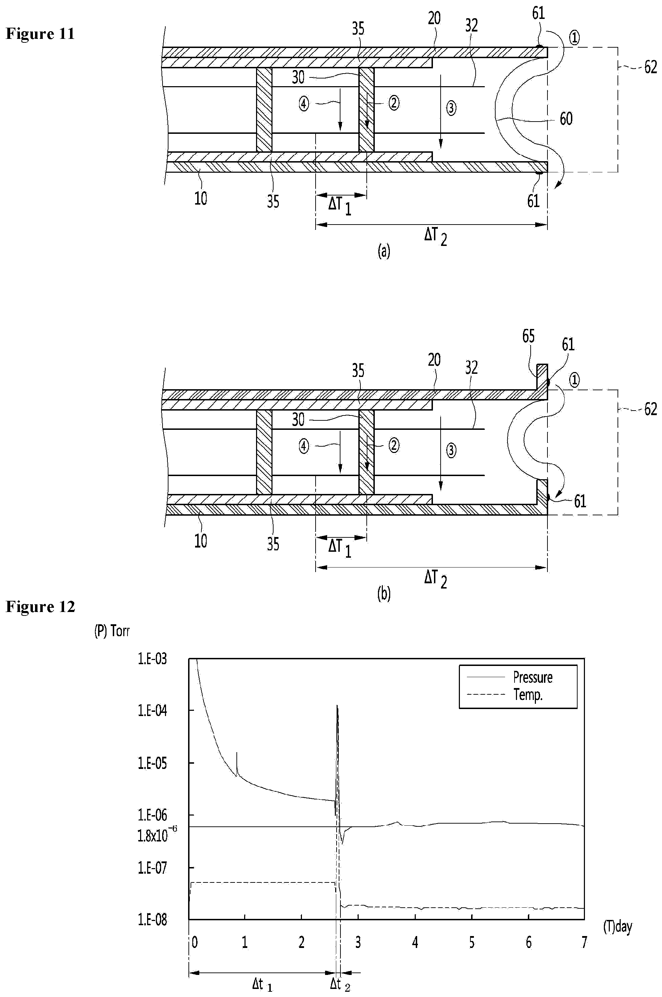

Fig. 11 is a view of a conductive resistance sheet and a peripheral portion of the conductive resistance sheet.

Referring to Fig. 11a, the first and second plate members 10 and 20 are to be sealed so as to vacuum the interior of the vacuum adiabatic body. In this case, since the two plate members have different temperatures from each other, heat transfer may occur between the two plate members. A conductive resistance sheet 60 is provided to prevent heat conduction between two different kinds of plate members.

The conductive resistance sheet 60 may be provided with sealing parts 61 at which both ends of the conductive resistance sheet 60 are sealed to defining at least one portion of the wall for the third space and maintain the vacuum state. The conductive resistance sheet 60 may be provided as a thin foil in unit of micrometer so as to reduce the amount of heat conducted along the wall for the third space. The sealing parts 61 may be provided as welding parts. That is, the conductive resistance sheet 60 and the plate members 10 and 20 may be fused to each other. In order to cause a fusing action between the conductive resistance sheet 60 and the plate members 10 and 20, the conductive resistance sheet 60 and the plate members 10 and 20 may be made of the same material, and a stainless material may be used as the material. The sealing parts 61 are not limited to the welding parts, and may be provided through a process such as cocking. The conductive resistance sheet 60 may be provided in a curved shape. Thus, a heat conduction distance of the conductive resistance sheet 60 is provided longer than the linear distance of each plate member, so that the amount of heat conduction may be further reduced.

A change in temperature occurs along the conductive resistance sheet 60. Therefore, in order to block heat transfer to the exterior of the conductive resistance sheet 60, a shielding part 62 may be provided at the exterior of the conductive resistance sheet 60 such that an adiabatic action occurs. In other words, in the vehicle refrigerator 7 in accordance with claim 1, the second plate member 20 has a high temperature and the first plate member 10 has a low temperature. In addition, heat conduction from high temperature to low temperature occurs in the conductive resistance sheet 60, and hence the temperature of the conductive resistance sheet 60 is suddenly changed. Therefore, when the conductive resistance sheet 60 is opened to the exterior thereof, heat transfer through the opened place may seriously occur.

In order to reduce heat loss, the shielding part 62 is provided at the exterior of the conductive resistance sheet 60. For example, when the conductive resistance sheet 60 is exposed to any one of the low-temperature space and the high-temperature space, the conductive resistance sheet 60 does not serve as a conductive resistor as well as the exposed portion thereof, which is not preferable.

The shielding part 62 may be provided as a porous substance contacting an outer surface of the conductive resistance sheet 60, may be provided as an adiabatic structure, e.g., a separate gasket, which is placed at the exterior of the conductive resistance sheet 60, or may be provided as the console cover 300 disposed at a position facing the conductive resistance sheet 60.

A heat transfer path between the first and second plate members 10 and 20 will be described. Heat passing through the vacuum adiabatic body may be divided into surface conduction heat ① conducted along a surface of the vacuum adiabatic body, more specifically, the conductive resistance sheet 60, supporter conduction heat (2) conducted along the supporting unit 30 provided inside the vacuum adiabatic body, gas conduction heat ③ conducted through an internal gas in the vacuum space part, and radiation transfer heat ④ transferred through the vacuum space part.

The transfer heat may be changed depending on various depending on various design dimensions. For example, the supporting unit may be changed such that the first and second plate members 10 and 20 may endure a vacuum pressure without being deformed, the vacuum pressure may be changed, the distance between the plate members may be changed, and the length of the conductive resistance sheet may be changed. The transfer heat may be changed depending on a difference in temperature between the spaces (the first and second spaces) respectively provided by the plate members. In the embodiment, a preferred configuration of the vacuum adiabatic body has been found by considering that its total heat transfer amount is smaller than that of a typical adiabatic structure formed by foaming polyurethane. In a typical refrigerator including the adiabatic structure formed by foaming the polyurethane, an effective heat transfer coefficient may be proposed as about 19.6 mW/mK.

By performing a relative analysis on heat transfer amounts of the vacuum adiabatic body of the embodiment, a heat transfer amount by the gas conduction heat ③ may become smallest. For example, the heat transfer amount by the gas conduction heat ③ may be controlled to be equal to or smaller than 4% of the total heat transfer amount. A heat transfer amount by solid conduction heat defined as a sum of the surface conduction heat ① and the supporter conduction heat ② is largest. For example, the heat transfer amount by the solid conduction heat may reach 75% of the total heat transfer amount. A heat transfer amount by the radiation transfer heat ④ is smaller than the heat transfer amount by the solid conduction heat but larger than the heat transfer amount of the gas conduction heat ③. For example, the heat transfer amount by the radiation transfer heat ④ may occupy about 20% of the total heat transfer amount.

According to such a heat transfer distribution, effective heat transfer coefficients (eK: effective K) (W/mK) of the surface conduction heat ①, the supporter conduction heat ②, the gas conduction heat ③, and the radiation transfer heat ④ may have an order of Math Figure 1. ${eK}_{solid conduction heat} > {eK}_{radiation transfer heat} > {eK}_{gas conduction heat}$ Math Figure 1

Here, the effective heat transfer coefficient (eK) is a value that may be measured using a shape and temperature differences of a target product. The effective heat transfer coefficient (eK) is a value that may be obtained by measuring a total heat transfer amount and a temperature at least one portion at which heat is transferred. For example, a calorific value (W) is measured using a heating source that may be quantitatively measured in the refrigerator, a temperature distribution (K) of the door is measured using heats respectively transferred through a main body and an edge of the door of the refrigerator, and a path through which heat is transferred is calculated as a conversion value (m), thereby evaluating an effective heat transfer coefficient.

The effective heat transfer coefficient (eK) of the entire vacuum adiabatic body is a value given by k=QL/AΔT. Here, Q denotes a calorific value (W) and may be obtained using a calorific value of a heater. A denotes a sectional area (m2) of the vacuum adiabatic body, L denotes a thickness (m) of the vacuum adiabatic body, and ΔT denotes a temperature difference.

For the surface conduction heat, a conductive calorific value may be obtained through a temperature difference (ΔT) between an entrance and an exit of the conductive resistance sheet 60 or 63, a sectional area (A) of the conductive resistance sheet, a length (L) of the conductive resistance sheet, and a thermal conductivity (k) of the conductive resistance sheet (the thermal conductivity of the conductive resistance sheet is a material property of a material and may be obtained in advance). For the supporter conduction heat, a conductive calorific value may be obtained through a temperature difference (ΔT) between an entrance and an exit of the supporting unit 30, a sectional area (A) of the supporting unit, a length (L) of the supporting unit, and a thermal conductivity (k) of the supporting unit. Here, the thermal conductivity of the supporting unit is a material property of a material and may be obtained in advance. The sum of the gas conduction heat ③, and the radiation transfer heat ④ may be obtained by subtracting the surface conduction heat and the supporter conduction heat from the heat transfer amount of the entire vacuum adiabatic body. A ratio of the gas conduction heat ③, and the radiation transfer heat ④ may be obtained by evaluating radiation transfer heat when no gas conduction heat exists by remarkably lowering a vacuum degree of the vacuum space part 50.

When a porous substance is provided inside the vacuum space part 50, porous substance conduction heat ⑤ may be a sum of the supporter conduction heat ② and the radiation transfer heat ④. The porous substance conduction heat ⑤ may be changed depending on various variables including a kind, an amount, and the like of the porous substance.

In the second plate member, a temperature difference between an average temperature of the second plate and a temperature at a point at which a heat transfer path passing through the conductive resistance sheet 60 meets the second plate may be largest. For example, when the second space is a region hotter than the first space, the temperature at the point at which the heat transfer path passing through the conductive resistance sheet meets the second plate member becomes lowest. Similarly, when the second space is a region colder than the first space, the temperature at the point at which the heat transfer path passing through the conductive resistance sheet meets the second plate member becomes highest.

This means that the amount of heat transferred through other points except the surface conduction heat passing through the conductive resistance sheet should be controlled, and the entire heat transfer amount satisfying the vacuum adiabatic body may be achieved only when the surface conduction heat occupies the largest heat transfer amount. To this end, a temperature variation of the conductive resistance sheet may be controlled to be larger than that of the plate member.

Physical characteristics of the parts constituting the vacuum adiabatic body will be described. In the vacuum adiabatic body, a force by vacuum pressure is applied to all of the parts. Therefore, a material having strength (N/m2) of a certain level may be used.

Referring to Fig. 11b, this configuration is the same as that of Fig. 11a except that portions at which the first plate member 10, the second plate member 20 are coupled to the conductive resistance sheet 60. Thus, the same part omits the description and only the characteristic changes are described in detail.

Ends of the plate members 10 and 20 may be bent to the second space having a high temperature to form a flange part 65. A welding part 61 may be disposed on a top surface of the flange part 65 to couple the conductive resistance sheet 60 to the flange part 65. In this embodiment, the worker may perform welding while facing only any one surface. Thus, since it is unnecessary to perform two processes, the process may be convenient.

It is more preferable to apply the case in which welding of the inside and the outside are difficult as illustrated in Fig. 11a because a space of the vacuum space part 50 is narrow like the vehicle refrigerator 7.

Fig. 12 is a graph illustrating results obtained by observing a time and a pressure in a process of exhausting the inside of the vacuum adiabatic body when a supporting unit is used.

Referring to Fig. 12, in order to create the vacuum space part 50 to be in the vacuum state, a gas in the vacuum space part 50 is exhausted by a vacuum pump while evaporating a latent gas remaining in the parts of the vacuum space part 50 through heating. However, if the vacuum pressure reaches a certain level or more, there exists a point at which the level of the vacuum pressure is not increased any more (Δt1). After that, the getter is activated by disconnecting the vacuum space part 50 from the vacuum pump and applying heat to the vacuum space part 50 (Δt2). If the getter is activated, the pressure in the vacuum space part 50 is decreased for a certain period of time, but then normalized to maintain a vacuum pressure of a certain level. The vacuum pressure that maintains the certain level after the activation of the getter is approximately 1.8×10⁻⁶ Torr.

In the embodiment, a point at which the vacuum pressure is not substantially decreased any more even though the gas is exhausted by operating the vacuum pump is set to the lowest limit of the vacuum pressure used in the vacuum adiabatic body, thereby setting the minimum internal pressure of the vacuum space part 50 to 1.8×10⁻⁶ Torr.

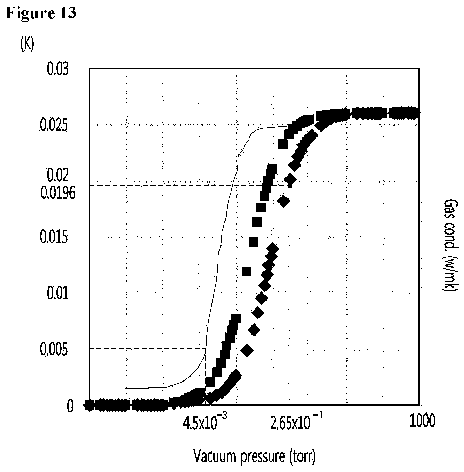

Fig. 13 is a graph obtained by comparing a vacuum pressure with gas conductivity.

Referring to Fig. 13, gas conductivities with respect to vacuum pressures depending on sizes of a gap in the vacuum space part 50 are represented as graphs of effective heat transfer coefficients (eK). Effective heat transfer coefficients (eK) were measured when the gap in the vacuum space part 50 has three sizes of 2.76 mm, 6.5 mm, and 12.5 mm. The gap in the vacuum space part 50 is defined as follows. When the radiation resistance sheet 32 exists inside vacuum space part 50, the gap is a distance between the radiation resistance sheet 32 and the plate member adjacent thereto. When the radiation resistance sheet 32 does not exist inside vacuum space part 50, the gap is a distance between the first and second plate members.

It may be seen that, since the size of the gap is small at a point corresponding to a typical effective heat transfer coefficient of 0.0196 W/mK, which is provided to an adiabatic material formed by foaming polyurethane, the vacuum pressure is 2.65×10⁻¹ Torr even when the size of the gap is 2.76 mm. Meanwhile, it may be seen that the point at which reduction in adiabatic effect caused by gas conduction heat is saturated even though the vacuum pressure is decreased is a point at which the vacuum pressure is approximately 4.5×10⁻³ Torr. The vacuum pressure of 4.5× 10⁻³ Torr may be defined as the point at which the reduction in adiabatic effect caused by gas conduction heat is saturated. Also, when the effective heat transfer coefficient is 0.1 W/mK, the vacuum pressure is 1.2×10⁻² Torr.

When the vacuum space part 50 is not provided with the supporting unit but provided with the porous substance, the size of the gap ranges from a few micrometers to a few hundreds of micrometers. In this case, the amount of radiation heat transfer is small due to the porous substance even when the vacuum pressure is relatively high, i.e., when the vacuum degree is low. Therefore, an appropriate vacuum pump is used to adjust the vacuum pressure. The vacuum pressure appropriate to the corresponding vacuum pump is approximately 2.0×10⁻⁴ Torr. Also, the vacuum pressure at the point at which the reduction in adiabatic effect caused by gas conduction heat is saturated is approximately 4.7×10⁻² Torr. Also, the pressure where the reduction in adiabatic effect caused by gas conduction heat reaches the typical effective heat transfer coefficient of 0.0196 W/mK is 730 Torr.

When the supporting unit and the porous substance are provided together in the vacuum space part, a vacuum pressure may be created and used, which is middle between the vacuum pressure when only the supporting unit is used and the vacuum pressure when only the porous substance is used.

### Industrial Applicability

According to the embodiments, the vehicle refrigerator in accordance with claim 1 that receives only power from the outside and is independent apparatus may be efficiently realized.

## Claims

1. A refrigerator (7) for a vehicle comprising:
a cavity (100) for accommodating a product;
a machine room (200) disposed at a side of the cavity (100);
a machine room cover (700) defining an inner space of the machine room (200);
a controller (900) mounted on the machine room cover (700);
a compressor (201) accommodated in the machine room (200) to compress a refrigerant;
a condensation module (500) accommodated in the machine room (200) to condense the refrigerant;
an evaporation module (400) accommodated in the cavity (100) to evaporate the refrigerant and thereby to cool the cavity (100); and
a refrigerant conduit (600) configured to allow the refrigerant to flow, and provided in the machine room (200),
wherein
a portion of the refrigerant conduit (600) extends to an inside of the cavity (100) to supply the refrigerant, **characterized in that** the refrigerant conduit (600) extends to an outside of the cavity (100) through an upper opening through which a product is accessible in the cavity (100).

2. The refrigerator according to claim 1, further comprising:
a console (3) provided as a separate part that is made of a resin and having a console space (4) therein, and
a console cover (300) configured to cover the console space (4),
wherein the controller (900) is disposed in a space between the console cover (300) and the machine room cover (700).

3. The refrigerator according to claim 1, further comprising:
a console (3) provided as a separate part that is made of a resin and having a console space (4) therein, and
a console cover (300) configured to cover the console space (4),
wherein the controller (900) is cooled by air flowing through a gap between the machine room cover (700) and the console cover (300), and
wherein the controller (900) is separated from an inner space of the machine room (200) by the machine room cover (700).

4. The refrigerator according to any one of the preceding claims, further comprising a cavity coupling part (742) disposed at a right side of the machine room cover (700), such that the machine room cover (700) and the cavity (100) are provided as one body.

5. The refrigerator according to any one of the preceding claims, further comprising controller coupling parts (737, 738) configured to couple and fix the controller (900) to the machine room cover (700).

6. The refrigerator according to any one of the preceding claims, further comprising:
a through-hole (741) configured to guide the refrigerant conduit (600), and defined in a right side of the machine room cover (700),
wherein the refrigerant conduit (600), which passes through the through-hole (741), is configured to correspond to a regeneration conduit adiabatic member for thermally insulating a regeneration conduit system that exchanges heat of a first refrigerant conduit, which is introduced into the evaporation module (400), and heat of a second refrigerant conduit, which is discharged from the evaporation module (400), and
wherein the regeneration conduit system constitutes a portion of the refrigerant conduit (600).

7. The refrigerator according to any one of the preceding claims, wherein the machine room (200) is supported by a single frame together with the cavity (100), and the machine room cover (700) is coupled to the cavity (100).

8. The refrigerator according to any one of the preceding claims, wherein the controller (900) is provided on a stepped part of the machine room cover (700).

9. The refrigerator according to claim 8, wherein the stepped part includes a first step part (732), a second stepped part (733), and a third stepped part (735) that are successively provided backward from a front surface.

10. The refrigerator according to any one of claims 1 to 7, wherein the machine room cover (700) has a height that gradually increases backward from a front surface (710).

11. The refrigerator according to any one of the preceding claims, further comprising:
a console (3) provided as a separate part that is made of a resin and having a console space (4) therein,
a console cover (300) configured to cover the console space (4), and
a suction port (5) provided in a right surface of the console (3) to introduce air within the vehicle into the console space (4),
wherein the cavity (100) has an opened top surface and five surfaces that are covered by a vacuum adiabatic body (101),
wherein the vacuum adiabatic body (101) includes a first plate member (10) providing a boundary of a low-temperature inner space of the cavity (100), a second plate member (20) providing a boundary of a high-temperature outer space, and a conductive resistance sheet (60) blocking heat transfer between the first plate member (10) and the second plate member (20), and
wherein the air introduced into the suction port (5) moves to a left side of the refrigerator through a space between the vacuum adiabatic body (101) defining a front wall of the cavity (100) and a front surface of the console space (4).

12. The refrigerator according to claim 11, wherein the air moving to the left side of the refrigerator changes its direction to a rear side such that the air moves along a top surface of the machine room (700) outside the machine room (200).

13. The refrigerator according to claim 12, wherein the air moving up to the rear side of the machine room cover (700) flows downward.

14. The refrigerator according to any one of claims 1 to 10 or any one of claims 12 or 13,
wherein the cavity (100) has an opened top surface and five surfaces that are covered by a vacuum adiabatic body (101), and
wherein the vacuum adiabatic body (101) includes a first plate member (10) providing a boundary of a low-temperature inner space of the cavity (100), a second plate member (20) providing a boundary of a high-temperature outer space, and a conductive resistance sheet (60) blocking heat transfer between the first plate member (10) and the second plate member (20).

## Patentansprüche

1. Kühlschrank (7) für ein Fahrzeug, der Folgendes umfasst:
einen Hohlraum (100) zum Aufnehmen eines Erzeugnisses;
einen Maschinenraum (200), der auf einer Seite des Hohlraums (100) angeordnet ist;
eine Maschinenraumabdeckung (700), die einen Innenraum des Maschinenraums (200) definiert;
eine Steuereinheit (900), die auf der Maschinenraumabdeckung (700) angebracht ist;
einen Kompressor (201), der im Maschinenraum (200) aufgenommen ist, um ein Kühlmittel zu komprimieren;
ein Kondensationsmodul (500), das im Maschinenraum (200) aufgenommen ist, um das Kühlmittel zu kondensieren;
ein Verdampfungsmodul (400), das im Hohlraum (100) aufgenommen ist, um das Kühlmittel zu verdampfen und dadurch den Hohlraum (100) zu kühlen; und
eine Kühlmittelleitung (600), die konfiguriert ist zu ermöglichen, dass das Kühlmittel strömt, und im Maschinenraum (200) vorgesehen ist,
wobei sich ein Abschnitt der Kühlmittelleitung (600) nach innerhalb des Hohlraums (100) erstreckt, um das Kühlmittel zuzuführen,
**dadurch gekennzeichnet, dass** sich die Kühlmittelleitung (600) durch eine obere Öffnung, durch die auf ein Erzeugnis im Hohlraum (100) zugegriffen werden kann, nach außerhalb des Hohlraums (100) erstreckt.

2. Kühlschrank nach Anspruch 1, der ferner Folgendes umfasst:
eine Konsole (3), die als eine getrennte Komponente vorgesehen ist, die aus einem Harz hergestellt ist und in der ein Konsolenraum (4) vorhanden ist, und
eine Konsolenabdeckung (300), die konfiguriert ist, den Konsolenraum (4) abzudecken,
wobei die Steuereinheit (900) in einem Raum zwischen der Konsolenabdeckung (300) und der Maschinenraumabdeckung (700) angeordnet ist.

3. Kühlschrank nach Anspruch 1, der ferner Folgendes umfasst:
eine Konsole (3), die als eine getrennte Komponente vorgesehen ist, die aus einem Harz hergestellt ist und einen Konsolenraum (4) darin aufweist, und
eine Konsolenabdeckung (300), die konfiguriert ist, den Konsolenraum (4) abzudecken,
wobei die Steuereinheit (900) durch Luft gekühlt wird, die durch einen Zwischenraum zwischen der Maschinenraumabdeckung (700) und der Konsolenabdeckung (300) strömt, und
wobei die Steuereinheit (900) durch die Maschinenraumabdeckung (700) von einem Innenraum des Maschinenraums (200) getrennt ist.

4. Kühlschrank nach einem der vorhergehenden Ansprüche, der ferner eine Hohlraumkopplungskomponente (742) umfasst, die auf einer rechten Seite der Maschinenraumabdeckung (700) angeordnet ist, derart, dass die Maschinenraumabdeckung (700) und der Hohlraum (100) als ein Körper bereitgestellt werden.

5. Kühlschrank nach einem der vorhergehenden Ansprüche, der ferner Steuereinheits-Kopplungskomponenten (737, 738) umfasst, die konfiguriert sind, die Steuereinheit (900) mit der Maschinenraumabdeckung (700) zu koppeln und daran zu befestigen.

6. Kühlschrank nach einem der vorhergehenden Ansprüche, der ferner Folgendes umfasst:
ein Durchgangsloch (741), das konfiguriert ist, die Kühlmittelleitung (600) zu führen, und in einer rechten Seite der Maschinenraumabdeckung (700) definiert ist,
wobei die Kühlmittelleitung (600), die durch das Durchgangsloch (741) verläuft, konfiguriert ist, einem adiabatischen Element einer Wiedergewinnungsleitung zum thermischen Isolieren eines Wiedergewinnungsleitungssystems, das Wärme einer ersten Kühlmittelleitung, die in das Verdampfungsmodul (400) eingebracht wird, und Wärme einer zweiten Kühlmittelleitung, die aus dem Verdampfungsmodul (400) ausgelassen wird, austauscht, zu entsprechen, und
wobei das Wiedergewinnungsleitungssystem einen Abschnitt der Kühlmittelleitung (600) bildet.

7. Kühlschrank nach einem der vorhergehenden Ansprüche, wobei der Maschinenraum (200) durch einen einzigen Rahmen zusammen mit dem Hohlraum (100) getragen wird und die Maschinenraumabdeckung (700) mit dem Hohlraum (100) gekoppelt ist.

8. Kühlschrank nach einem der vorhergehenden Ansprüche, wobei die Steuereinheit (900) auf einem gestuften Abschnitt der Maschinenraumabdeckung (700) vorgesehen ist.

9. Kühlschrank nach Anspruch 8, wobei der gestufte Abschnitt einen ersten Stufenabschnitt (732), einen zweiten gestuften Abschnitt (733) und einen dritten gestuften Abschnitt (735) enthält, die ausgehend von einer vorderen Fläche in Rückwärtsrichtung nacheinander vorgesehen sind.

10. Kühlschrank nach einem der Ansprüche 1 bis 7, wobei die Maschinenraumabdeckung (700) eine Höhe aufweist, die ausgehend von einer vorderen Fläche (710) allmählich nach hinten zunimmt.

11. Kühlschrank nach einem der vorhergehenden Ansprüche, der ferner Folgendes umfasst:
eine Konsole (3), die als eine getrennte Komponente vorgesehen ist, die aus einem Harz hergestellt ist und in der ein Konsolenraum (4) vorhanden ist, und
eine Konsolenabdeckung (300), die konfiguriert ist, den Konsolenraum (4) abzudecken, und
eine Ansaugöffnung (5), die in einer rechten Fläche der Konsole (3) vorgesehen ist, um Luft im Auto in den Konsolenraum (4) einzubringen,
wobei der Hohlraum (100) eine geöffnete obere Fläche und fünf Flächen, die durch einen adiabatischen Vakuumkörper (101) abgedeckt sind, aufweist,
wobei der adiabatische Vakuumkörper (101) ein erstes Plattenelement (10), das eine Begrenzung eines Innenraums des Hohlraums (100) mit niedriger Temperatur bereitstellt, ein zweites Plattenelement (20), das eine Begrenzung eines Außenraums mit hoher Temperatur bereitstellt, und eine Leitfähigkeitswiderstandsfolie (60), die die Wärmeübertragung zwischen dem ersten Plattenelement (10) und dem zweiten Plattenelement (20) blockiert, enthält, und
wobei sich die Luft, die in die Ansaugöffnung (5) eingebracht wird, durch einen Raum zwischen dem adiabatischen Vakuumkörper (101), der eine vordere Wand des Hohlraums (100) definiert, und einer vorderen Fläche des Konsolenraums (4) zu einer linken Seite des Kühlschranks bewegt.

12. Kühlschrank nach Anspruch 11, wobei die Luft, die sich zur linken Seite des Kühlschranks bewegt, ihre Richtung auf eine Rückseite zu ändert, derart, dass sich die Luft entlang einer oberen Fläche des Maschinenraums (700) nach außerhalb des Maschinenraums (200) bewegt.

13. Kühlschrank nach Anspruch 12, wobei die Luft, die sich bis zur Rückseite der Maschinenraumabdeckung (700) bewegt, nach unten strömt.

14. Kühlschrank nach einem der Ansprüche 1 bis 10 oder einem der Ansprüche 12 oder 13,
wobei der Hohlraum (100) eine offene obere Fläche und fünf Flächen, die durch einen adiabatischen Vakuumkörper (101) abgedeckt sind, aufweist, und
wobei der adiabatische Vakuumkörper (101) ein erstes Plattenelement (10), das eine Begrenzung eines Innenraums des Hohlraums (100) mit niedriger Temperatur bereitstellt, ein zweites Plattenelement (20), das eine Begrenzung eines Außenraums mit hoher Temperatur bereitstellt, und eine Leitfähigkeitswiderstandsfolie (60), die die Wärmeübertragung zwischen dem ersten Plattenelement (10) und dem zweiten Plattenelement (20) blockiert, umfasst.

## Revendications

1. Réfrigérateur (7) pour un véhicule comportant :
une cavité (100) pour recevoir un produit ;
un compartiment machine (200) disposé sur un côté de la cavité (100) ;
un couvercle de compartiment machine (700) définissant un espace intérieur du compartiment machine (200) ;
une commande (900) montée sur le couvercle de compartiment machine (700) ;
un compresseur (201) reçu dans le compartiment machine (200) pour comprimer un fluide frigorigène ;
un module de condensation (500) reçu dans le compartiment machine (200) pour condenser le fluide frigorigène ;
un module d'évaporation (400) reçu dans la cavité (100) pour évaporer le fluide frigorigène et pour ainsi refroidir la cavité (100) ; et
un conduit de fluide frigorigène (600) configuré pour permettre au fluide frigorigène de s'écouler, et disposé dans le compartiment machine (200),
dans lequel
une portion du conduit de fluide frigorigène (600) s'étend jusqu'à un intérieur de la cavité (100) pour fournir le fluide frigorigène, **caractérisé en ce que**
le conduit de fluide frigorigène (600) s'étend jusqu'à un extérieur de la cavité (100) à travers une ouverture supérieure à travers laquelle un produit est accessible dans la cavité (100).

2. Réfrigérateur selon la revendication 1, comportant en outre :
une console (3) fournie sous la forme d'une partie séparée qui est constituée d'une résine et ayant un espace de console (4) dans celle-ci, et
un couvercle de console (300) configuré pour recouvrir l'espace de console (4),
dans lequel la commande (900) est disposée dans un espace entre le couvercle de console (300) et le couvercle de compartiment machine (700).

3. Réfrigérateur selon la revendication 1, comportant en outre :
une console (3) fournie sous la forme d'une partie séparée qui est constituée d'une résine et ayant un espace de console (4) dans celle-ci, et
un couvercle de console (300) configuré pour recouvrir l'espace de console (4),
dans lequel la commande (900) est refroidie par de l'air s'écoulant à travers un interstice entre le couvercle de compartiment machine (700) et le couvercle de console (300), et
dans lequel la commande (900) est séparée d'un espace intérieur du compartiment machine (200) par le couvercle de compartiment machine (700).

4. Réfrigérateur selon l'une quelconque des revendications précédentes, comportant en outre une partie de couplage de cavité (742) disposée sur un côté droit du couvercle de compartiment machine (700), de telle sorte que le couvercle de compartiment machine (700) et la cavité (100) sont fournis sous la forme d'un seul corps.

5. Réfrigérateur selon l'une quelconque des revendications précédentes, comportant en outre des parties de couplage de commande (737, 738) configurées pour coupler et fixer la commande (900) au couvercle de compartiment machine (700).

6. Réfrigérateur selon l'une quelconque des revendications précédentes, comportant en outre :
un trou traversant (741) configuré pour guider le conduit de fluide frigorigène (600), et défini dans un côté droit du couvercle de compartiment machine (700),
dans lequel le conduit de fluide frigorigène (600), qui passe à travers le trou traversant (741), est configuré pour correspondre à un élément adiabatique de conduit de régénération pour isoler thermiquement un système de conduit de régénération qui échange la chaleur d'un premier conduit de fluide frigorigène, qui est introduite dans le module d'évaporation (400), et la chaleur d'un second conduit de fluide frigorigène, qui est évacuée du module d'évaporation (400), et
dans lequel le système de conduit de régénération constitue une portion du conduit de fluide frigorigène (600).

7. Réfrigérateur selon l'une quelconque des revendications précédentes, dans lequel le compartiment machine (200) est supporté par un seul châssis en association avec la cavité (100), et le couvercle de compartiment machine (700) est couplé à la cavité (100).

8. Réfrigérateur selon l'une quelconque des revendications précédentes, dans lequel la commande (900) est agencée sur une partie étagée du couvercle de compartiment machine (700).

9. Réfrigérateur selon la revendication 8, dans lequel la partie étagée inclut une première partie étagée (732), une deuxième partie étagée (733) et une troisième partie étagée (735) qui sont successivement agencées vers l'arrière à partir d'une surface avant.

10. Réfrigérateur selon l'une quelconque des revendications 1 à 7, dans lequel le couvercle de compartiment machine (700) a une hauteur qui augmente graduellement vers l'arrière à partir d'une surface avant (710).

11. Réfrigérateur selon l'une quelconque des revendications précédentes, comportant en outre :
une console (3) fournie sous la forme d'une partie séparée qui est constituée d'une résine et ayant un espace de console (4) dans celle-ci,
un couvercle de console (300) configuré pour recouvrir l'espace de console (4), et
un orifice d'aspiration (5) ménagé dans une surface droite de la console (3) pour introduire de l'air à l'intérieur du véhicule dans l'espace de console (4),
dans lequel la cavité (100) a une surface supérieure ouverte et cinq surfaces qui sont recouvertes par un corps adiabatique sous vide (101),
dans lequel le corps adiabatique sous vide (101) inclut un premier élément de plaque (10) fournissant une frontière d'un espace intérieur à basse température de la cavité (100), un second élément de plaque (20) fournissant une frontière d'un espace extérieur à haute température, et une tôle de résistance conductrice (60) bloquant un transfert de chaleur entre le premier élément de plaque (10) et le second élément de plaque (20), et
dans lequel l'air introduit dans l'orifice d'aspiration (5) se déplace jusqu'à un côté gauche du réfrigérateur à travers un espace entre le corps adiabatique sous vide (101) définissant une paroi avant de la cavité (100) et une surface avant de l'espace de console (4).

12. Réfrigérateur selon la revendication 11, dans lequel l'air se déplaçant jusqu'au côté gauche du réfrigérateur change sa direction vers un côté arrière de telle sorte que l'air se déplace le long d'une surface supérieure du compartiment machine (700) à l'extérieur du compartiment machine (200).

13. Réfrigérateur selon la revendication 12, dans lequel l'air se déplaçant vers le haut jusqu'au côté arrière du couvercle de compartiment machine (700) s'écoule vers le bas.

14. Réfrigérateur selon l'une quelconque des revendications 1 à 10 ou l'une quelconque des revendications 12 ou 13,
dans lequel la cavité (100) a une surface supérieure ouverte et cinq surfaces qui sont recouvertes par un corps adiabatique sous vide (101), et
dans lequel le corps adiabatique sous vide (101) inclut un premier élément de plaque (10) fournissant une frontière d'un espace intérieur à basse température de la cavité (100), un second élément de plaque (20) fournissant une frontière d'un espace extérieur à haute température, et une tôle de résistance conductrice (60) bloquant un transfert de chaleur entre le premier élément de plaque (10) et le second élément de plaque (20).
